# EUROPEAN PATENT APPLICATION

(11) **EP 4 674 528 A1**
(43) Date of publication of application: **07.01.2026**
(21) Application number: 24771257.3
(22) Date of filing: 14.03.2024
(51) Int. Cl.: B01J 35/39, B01J 21/06, B01J 35/23, B01J 37/10

(54) **TITANIUM DIOXIDE PHOTOCATALYST AND PREPARATION METHOD THEREFOR**

(30) Priority: 16.03.2023 KR 20230034507
(71) Applicant: LG Electronics Inc., Yeongdeungpo-gu Seoul 07336 (KR); Kyungpook National University Industry-Academic Cooperation Foundation, Daegu 41566 (KR)
(72) Inventor: CHOI, Jae Bong, Seoul 08592 (KR); LEE, Hyeyong, Seoul 08592 (KR); LEE, Youngjun, Seoul 08592 (KR); PARK, Hyunwoong, Daegu 41566 (KR); KIM, Dong Jin, Daegu 41566 (KR)
(74) Representative: Vossius & Partner Patentanwälte Rechtsanwälte mbB
(86) International application number: PCT/KR2024/095521
(87) International publication number: WO 2024/191258

(57) **Abstract**

The present invention relates to a photocatalyst and a preparation method therefor. The photocatalyst according to the present invention comprises titanium dioxide with a bronze crystal phase and an anatase crystal phase so as to have high photoactivity, and thus is suitable for removing odors and toxic gases. In addition, the titanium dioxide included in the photocatalyst, according to the present invention, has a novel crystal phase having a charge separation effect superior to those of other crystal phases, and thus has improved photoactivity. Additionally, the photocatalyst of the present invention has high photoactivity, and thus is suitable for removing odors and toxic gases. In addition, the photocatalyst of the present invention has excellent durability against catalytic poisons formed on the surface of a catalyst during removal of VOCs and toxic gases (acetaldehyde, isovaleraldehyde, isovaleric acid and toluene).

## Description

### FIELD

The present disclosure relates to a titanium dioxide photocatalyst and a method for preparing the same, and more specifically, to a titanium dioxide photocatalyst having a bronze-anatase hybrid crystal.

### DESCRIPTION OF RELATED ART

A photocatalyst is a material that functions as a catalyst that accelerates a chemical reaction by changing a chemical state of a surface thereof when light such as visible light or ultraviolet light is irradiated thereto. When light is irradiated to the surface of the photocatalyst, radical materials such as hydroxy radicals and super oxide anions are generated, and the radical materials generated as such perform functions such as removal of various harmful substances, sterilization, and sterilization.

Representative photocatalytic materials include titanium dioxide (TiO₂), tin oxide (SnO₂), iron oxide (Fe₂O₃), tungsten oxide (WO₃), zinc oxide (ZnO), and the like. Although a large number of oxides are available as the photocatalysts, zinc oxide (ZnO) has a disadvantage in that the catalyst itself is decomposed by light and generates harmful zinc (Zn) ions, tungsten oxide (WO₃) has excellent efficiency as the photocatalyst only for a specific material, and tin oxide (SnO₂) and iron oxide (Fe₂O₃) have poor efficiencies as the photocatalysts. Among them, titanium dioxide (TiO₂) does not change even when exposed to light and thus is usable semi-permanently, and has a property of oxidizing all organic matter and decomposing the same into carbon dioxide and water. Accordingly, titanium dioxide is the most popular material as the photocatalyst.

Titanium dioxide is largely divided into rutile, anatase, and brookite structures based on a crystal structure. Recently, it has been known that the crystal structure of titanium dioxide has superior photoactivity when mixed with a rutile or brookite phase than with a pure anatase phase.

Nevertheless, the previously known photocatalysts do not exhibit high photoactivity suitable for removing odors or harmful gases.

Accordingly, a new photocatalyst suitable for removing the odors and the harmful gases with the high photoactivity is required.

### DISCLOSURE

### TECHNICAL PURPOSE

The present disclosure aims to provide a novel titanium dioxide photocatalyst suitable for removing odors and harmful gases with high photoactivity.

Further, the present disclosure aims to provide a titanium dioxide photocatalyst having a novel crystal phase with improved photoactivity resulted from improved charge separation compared to other crystal phases.

Further, the present disclosure aims to provide a method for preparing a titanium dioxide photocatalyst having a bronze-type crystal phase and an anatase-type crystal phase to have high photoactivity.

Objects of the present disclosure are not limited to the above-mentioned objects, and other objects and advantages of the present disclosure that are not mentioned may be understood by the following description, and will be more clearly understood by embodiments of the present disclosure. In addition, it will be readily seen that the objects and advantages of the present disclosure may be realized by means indicated in the claims and combinations thereof.

### TECHNICAL SOLUTION

A photocatalyst according to the present disclosure for solving the above-described problems includes titanium dioxide having a mixed crystal phase of a bronze-type crystal phase and an anatase-type crystal phase.

More specifically, the titanium dioxide may satisfy a ratio of the bronze-type crystal phase to the anatase-type crystal phase ranging from 30:70 to 0.1:99.9.

Further, a method for preparing a photocatalyst according to the present disclosure includes (a) adding photocatalyst powder including titanium dioxide to an alkaline solution and stirring the solution, (b) preparing a gel by performing hydrothermal synthesis on the stirred solution, (c) washing and drying the gel, and (d) pulverizing and heat-treating the dried gel.

Here, the hydrothermal synthesis may be performed at a temperature in a range of 90 to 200°C for 5 to 72 hours, the washing may include primarily washing the gel with an acidic solution and secondarily washing the gel with purified water, and the heat treatment may include heating the gel up to a temperature in a range of 550 to 650°C under a temperature increase condition of 0.2 to 20°C per minute and then maintaining the temperature for 1 to 150 minutes.

Further, the alkaline solution may include NaOH or KOH having a concentration in a range of 2 to 20M, and the acidic solution may include at least one of HCl, HNO₃, H₂SO₄, and HF having a concentration in a range of 0.05 to 10M.

### TECHNICAL EFFECT

The titanium dioxide included in the photocatalyst according to the present disclosure has the novel crystal phase with the improved photoactivity resulted from the improved charge separation compared to other crystal phases.

Further, the photocatalyst according to the present disclosure has the effect suitable for removing the odors and the harmful gases with the high photoactivity.

Further, the photocatalyst according to the present disclosure has the excellent durability against the catalyst poison generated on the surface of the catalyst when the VOCs and the harmful gases (acetaldehyde, isovaleraldehyde, isovalderic acid, and toluene) are removed.

Further, according to the method for preparing the photocatalyst according to the present disclosure, the titanium dioxide photocatalyst that further improves photodecomposition ability by having the anatase-bronze hybrid crystal structure, and is suitable for easily removing the odors and the harmful gases from an economic standpoint may be prepared rather than the regular titanium dioxide photocatalyst.

### BRIEF DESCRIPTION OF DRAWINGS

FIG. 1 is a graph comparing acetaldehyde removal and decomposition performances of photocatalysts according to Present Example and Comparative Examples with each other.
FIG. 2 is a graph comparing toluene removal and decomposition performances of photocatalysts according to Present Example and Comparative Examples with each other.
FIG. 3 shows photographs showing surface of photocatalysts according to Present Example and Comparative Examples after toluene removal and decomposition tests.

### DETAILED DESCRIPTIONS

The above-described objects, features, and advantages will be described in detail later, and accordingly, a person having ordinary skill in the art to which the present disclosure pertains will be able to easily implement the technical idea of the present disclosure. In the description of the present disclosure, when it is determined that a detailed description of a known technology related to the present disclosure may unnecessarily obscure the gist of the present disclosure, a detailed description will be omitted. Hereinafter, preferred embodiments according to the present disclosure will be described in detail.

A singular expression used herein includes a plural expression unless the context clearly indicates otherwise. In the present application, terms such as "composed of" or "including" should not be construed as necessarily including all of the various components or steps described herein, but should be understood to mean that some of the components or steps may be omitted and/or that additional components or steps may be included.

Hereinafter, a photocatalyst and a method for preparing the same according to the present disclosure will be described in detail.

### <Photocatalyst>

The present disclosure provides a novel titanium dioxide photocatalyst suitable for removing odors and harmful gases with high photoactivity as described above.

The photocatalyst according to the present disclosure includes titanium dioxide having a bronze-type crystal phase and an anatase-type crystal phase.

Preferably, a ratio of the bronze-type crystal phase to the anatase-type crystal phase may range from 30:70 to 0.1:99.9.

The above-described photocatalyst according to the present disclosure is suitable for removing the odors and the harmful gases with the high photoactivity, and has excellent durability against catalyst poison generated on a surface of the catalyst when removing VOCs and the harmful gases (acetaldehyde, isovaleraldehyde, isovalderic acid, and toluene).

### <Photocatalyst preparation method>

Next, a method for preparing the photocatalyst according to the present disclosure will be described.

The method for preparing the photocatalyst according to the present disclosure includes (a) adding photocatalyst powder including titanium dioxide to an alkaline solution and stirring the solution; (b) preparing a gel by performing hydrothermal synthesis on the stirred solution; (c) washing and drying the gel; and (d) pulverizing and heat-treating the dried gel.

First, the method for preparing the photocatalyst according to the present disclosure includes (a) adding the photocatalyst powder including titanium dioxide to the alkaline solution and stirring the solution.

In (a), the photocatalytic powder including titanium dioxide may be prepared using a titanium dioxide precursor. The titanium dioxide precursor may be any compound including titanium, and as a specific example, may be selected from a group consisting of titanium ethoxide, titanium propoxide, titanium butoxide, titanium tetraethoxide, titanium tetraisopropoxide, titanium tetrabutoxide, titanium chloride, titanium dichloride, titanium trichloride, titanium tetrachloride, titanium bromide, titanium sulfide, and mixtures thereof.

In (a), the photocatalyst powder including titanium dioxide prepared as described above is added to the alkaline solution and stirred to be sufficiently mixed therewith.

The alkaline solution may be a solution including NaOH or KOH having a concentration in a range of 2 to 20M.

Next, the method for preparing the photocatalyst according to the present disclosure includes (b) preparing the gel by performing the hydrothermal synthesis on the stirred solution.

In (b), the hydrothermal synthesis step is preferably performed at a temperature in a range of 90 to 200°C for 5 to 72 hours.

Next, the method for preparing the photocatalyst according to the present disclosure includes (c) washing and drying the gel.

In (c), a process of washing the gel may include a process of primarily washing the gel with an acidic solution and secondarily washing the gel with purified water.

Here, the acidic solution may be a solution including at least one of HCl, HNO₃, H₂SO₄, and HF having a concentration in a range of 0.05 to 10M.

Next, the method for preparing the photocatalyst according to the present disclosure includes (d) pulverizing and heat-treating the dried gel.

In (d), the heat treatment process may be performed by heating the gel up to a temperature in a range of 550 to 650°C under a temperature increase condition of 0.2 to 20°C per minute and then maintaining the temperature for 1 to 150 minutes.

When the temperature increase condition, the temperature, and the time of the heat treatment process are below lower limits, the heat treatment may not be sufficiently performed, which is not preferable. In addition, when the temperature increase condition, the temperature, and the time of the heat treatment process exceed upper limits, the photocatalyst may have a crystal phase other than the bronze-anatase type, which is not preferable.

A titanium dioxide photocatalyst having the bronze-type crystal phase and the anatase-type crystal phase may be prepared by the above-described preparation method.

Hereinafter, specific aspects of the present disclosure will be described via Examples.

### <Examples>

### 1. Present Example - Preparation of TiO₂ photocatalyst

Titanium dioxide powder was added to 10M NaOH aqueous solution and stirred for complete dispersion. Thereafter, the solution with the powder dispersed was put into a hydrothermal synthesis reactor, and a hydrothermal synthesis reaction was performed at a temperature of 150°C for 24 hours.

After obtaining the gel whose reaction has been completed, the gel was primarily washed using 3M HCl solution, then secondarily washed using purified water, and then dried using an oven.

Dried particles obtained via the above process were finely pulverized and then subjected to the heat treatment for one hour by increasing the temperature thereof to a specified maximum temperature of 600°C under a temperature increase condition of 3°C per minute.

The heat-treated powder was obtained to prepare a TiO₂ photocatalyst according to Example.

It was seen that the obtained photocatalyst had the bronze crystal phase and the anatase crystal phase.

### 2. Experimental Example

### (1) Comparison of harmful substance removal and decomposition performance

Acetaldehyde decomposition and toluene decomposition performances of Present Example 1 prepared as described above and commercialized titanium dioxide photocatalysts (Comparative Examples 1 and 2) were compared with each other.

Comparative Example 1 is a commercial titanium dioxide photocatalyst having an anatase/rutile crystal phase, and Comparative Example 2 is a commercial titanium dioxide photocatalyst having an anatase crystal phase.

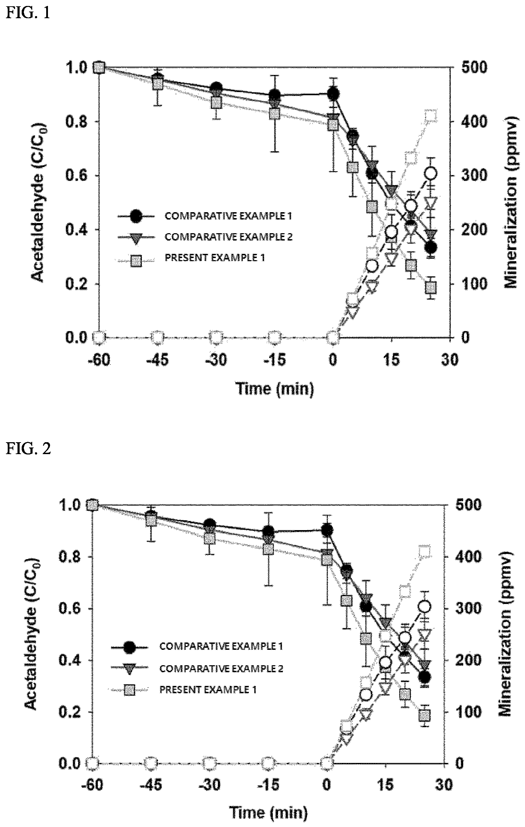

Referring to graphs in FIGS. 1 and 2, it may be seen that Present Example has superior removal and decomposition performances of the harmful substances compared to Comparative Examples 1 and 2.

### (2) Color comparison of photocatalyst powder after toluene removal test

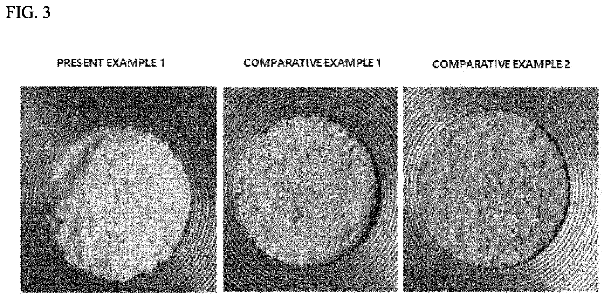

Referring to FIG. 3, after the toluene removal test, powder colors of Present Example and Comparative Examples may be compared with each other.

When the photocatalyst decomposes toluene, there is a problem that carbon impurities are generated on a surface of the photocatalyst, so that a photocatalyst performance is not sustained, but deteriorates. However, it may be seen that Present Example according to the present disclosure has an advantage in that the carbon impurities are not easily generated compared to Comparative Examples 1 and 2 after the toluene decomposition test. Therefore, it may be seen that the photocatalyst according to Present Example of the present disclosure may be used as an excellent catalyst having continuous catalytic activity compared to other photocatalysts.

The present disclosure has been described as above, but the present disclosure is not limited by the embodiments disclosed herein, and it is obvious that various modifications may be made by a person skilled in the art within the scope of the technical idea of the present disclosure. In addition, even when the effects based on the configuration of the present disclosure are not explicitly described and illustrated while describing the embodiments of the present disclosure, it is natural that effects predictable by the corresponding configuration should also be recognized.

## Claims

1. A photocatalyst comprising titanium dioxide having a bronze-type crystal phase and an anatase-type crystal phase.

2. The photocatalyst of claim 1, wherein a ratio of the bronze-type crystal phase to the anatase-type crystal phase ranges from 30:70 to 0.1:99.9.

3. A method for preparing a photocatalyst, the method comprising:
(a) adding photocatalyst powder including titanium dioxide to an alkaline solution and stirring the solution;
(b) preparing a gel by performing hydrothermal synthesis on the stirred solution;
(c) washing and drying the gel; and
(d) pulverizing and heat-treating the dried gel.

4. The method of claim 3, wherein the (b) is performed at a temperature in a range of 90 to 200°C for 5 to 72 hours.

5. The method of claim 3, wherein the (c) includes primarily washing the gel with an acidic solution, secondarily washing the gel with purified water, and then drying the gel.

6. The method of claim 5, wherein the acidic solution includes at least one of HCl, HNO₃, H₂SO₄, and HF having a concentration in a range of 0.05 to 10M.

7. The method of claim 3, wherein the (d) includes heating the gel up to a temperature in a range of 550 to 650°C under a temperature increase condition of 0.2 to 20°C per minute and then maintaining the temperature for 1 to 150 minutes.

8. The method of claim 3, wherein in the (a), the alkaline solution includes NaOH or KOH having a concentration in a range of 2 to 20M.
